# EUROPEAN PATENT SPECIFICATION

(11) **EP 0 530 967 B1**
(45) Date of publication and mention of the grant of the patent: **22.05.1996**
(21) Application number: 92306783.9
(22) Date of filing: 24.07.1992
(51) Int. Cl.: F16K 47/02, F16K 47/08, F16K 13/00, F16K 27/00, F15C 1/16

(54) **An improved flow control system**
Durchfluss-Regelsystem
Système de réglage du débit

(30) Priority: 03.09.1991 GB 9119196
(43) Date of publication of application: 10.03.1993
(73) Proprietor: UNITED KINGDOM ATOMIC ENERGY AUTHORITY, Oxfordshire OX11 0RA (GB)
(72) Inventor: Taylor, Stephen Alan, Preston, Lancashire PR1 5RX (GB)
(74) Representative: Wood, Paul Austin

(56) References cited:
- EP-A- 0 305 163
- DE-B- 1 955 973
- GB-A- 1 376 746
- US-A- 3 695 290

## Description

The present invention concerns fluid flow control systems and a method of operating such valves.

A major problem with industrial fluid flow systems, particularly when a fluid is abrasive, such as a slurry or aerosol, or contains dissolved gases, is erosion of control valves included in the fluid flow systems, due either to the abrasive nature of the fluid itself, or to cavitation when the valves are operating in a state in which they present considerable resistance to the flow of the fluid.

Vortex valves which do not contain moving parts frequently are used to control the flow of abrasive fluids.

EP specification 0,305,163 discloses a system according to the preamble of claim 1 in which the flow of a fluid in a fluid flow line is controlled by a vortex valve consisting of a vortex chamber having a radial inlet for the fluid, an axial outlet and a port by means of which a control fluid can be injected tangentially into the vortex chamber to vary the flow of the fluid through the vortex chamber. The control fluid is bled off from the main fluid flow line upstream of the vortex chamber and injected into the vortex chamber by means of a pump in the control fluid flow line under the control of a pressure transducer which senses changes in the pressure in the main fluid flow line and sends control signals to the pump accordingly.

The present invention provides a simpler self-acting system which does not require the inclusion of a pump to pressurise the control fluid flow line nor a control pressure transducer and so is inherently more reliable and less expensive than the system disclosed in EP specification 0,305,163.

According to the present invention a fluid flow control system including a vortex valve comprising a cylindrical vortex chamber having a radical inlet and an axial outlet adapted to form part of a main fluid flow line and a control fluid inlet by means of which a control fluid flow can be admitted to the vortex chamber, wherein there is provided a control fluid flow line directly connecting the main fluid flow line upstream of the vortex chamber with the control fluid inlet of the vortex chamber, a non-fluidic fluid control valve situated in the main fluid flow line between the junction of the main and control fluid flow lines and the inlet to the vortex chamber and means for altering the state of the non-fluidic fluid control valve thereby to cause a difference between the fluid pressure in the main fluid flow line downstream of the non-fluidic flow control valve and that in the control fluid flow line so as to effect the operation of the vortex valve and control the fluid flow in the main fluid flow line.

The non-fluidic valve can be any form of mechanical valve, such as for example a tap, butterfly or diaphragm and can be operated manually or by power means.

The invention will be described further, by way of example, with reference to the accompanying diagrammatic drawings, in which:-
Figure 1 is a diagrammatic sketch of a flow control system;
Figure 2 is an embodiment of the flow control system; and
Figure 3 illustrates a component part of a vortex valve.

The drawing shows a vortex valve 1 included in a flow line 2 for a fluid which can be gas or liquid. The vortex valve is a fluidic device having a vortex chamber 3 with inlet, outlet and control ports. In the present arrangement fluid flowing along the flow line 2 in the direction indicated by the arrow enters radially into the vortex chamber 3 at the inlet port and emerges axially from the chamber 3 at the outlet port.

A further flow line 4 is connected to the control port or ports of the vortex valve 1 and extends to a junction 5 in the first flow line 2 upstream of the vortex valve 1. A non-fluidic valve 6 is included in the flow line 2 at a position between the junction 5 and the vortex valve 1. The valve 6 can be any suitable type of mechanical valve and as example only mention can be made of butterfly and diaphragm valves. In addition the valve 6 can be operated by hand or by power means. The further flow line 4 can itself form or can include a flow restrictor to provide required divisions of flow between the lines 2 and 4.

In use and with the valve 6 fully open fluid in the line 2 can flow unhindered through both the valve 6 and the vortex valve 1. In the absence of control flow the vortex valve is in its low resistance mode.

Upon closing the valve 6, a pressure difference is created across the valve 6 with the result that the pressure at the inlet to the vortex valve 1 is less than the pressure at the upstream side of the valve 6 and hence is less than the pressure in the further flow line 4 to the control port. Thus, closing the valve 6 causes an increase in the pressure difference between the control and inlet ports. The control flow along the further flow line 4 acts on the flow along the line 2 to create a vortex in the vortex chamber 3 to thereby increase the flow resistance of the vortex valve 1. The resistance of the vortex valve 1 increases progressively with the closing of the valve 6.

The combination of the valve 6 and the vortex valve 1 functions as a control in the flow line 2. A small pressure drop across the valve 6 resulting in a small control flow can cause a significant increase in the resistance of the vortex valve 1 to flow along the line 2. The advantage from this arrangement compared to a non-fluidic valve alone in the flow line 2 is that the main resistance to flow occurs in the vortex valve 1 and does not take place at the valve 6. As mentioned a slight closing of the valve 6 can effect a considerable increase in the flow resistance of the vortex valve 1. Upon closing the valve 6 the flow velocity therethrough increases with consequent problems of erosion and cavitation effects on the valve 6. In combination with the vortex valve it is not necessary to close the valve 6 to the same extent as when using the valve 6 alone to obtain the same control in the flow. As a result the problems of erosion and cavitation are reduced with improved life for the valve 6.

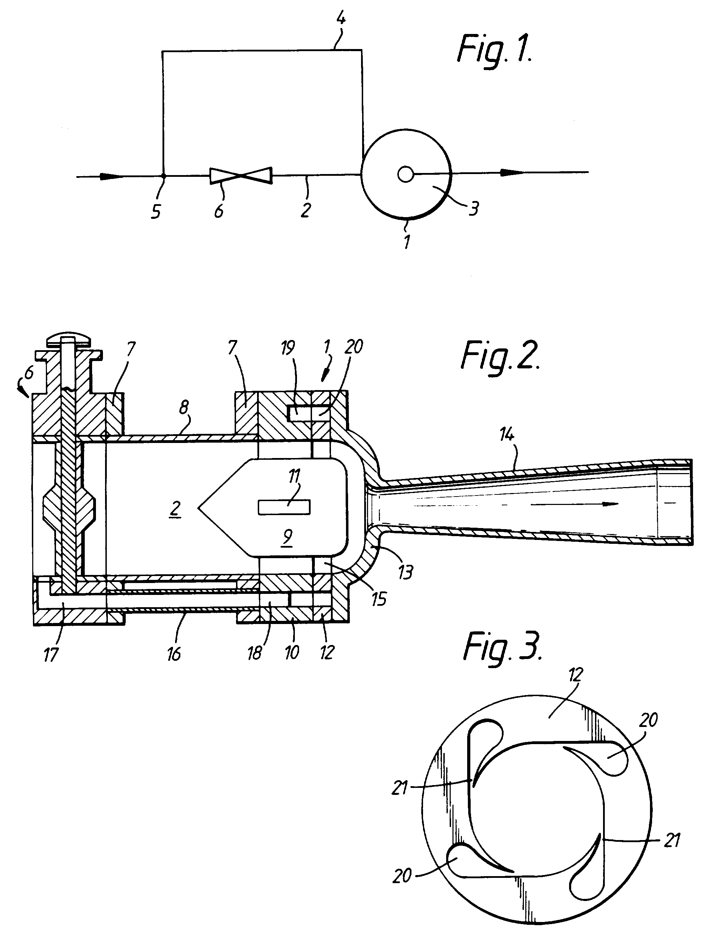

Figures 2 and 3 show one embodiment of the system and where applicable the same reference numerals are used in Figure 2 to denote the corresponding components in Figure 1.

In Figure 2, the vortex valve 1 and the non-fluidic valve 6 are mounted or secured to flanges 7 at the ends of a short length of pipe 8, the pipe being a part of the flow line 2. In this embodiment the valve 6 is a butterfly valve.

The vortex valve 1 comprises a body 9 centrally supported within an annular body 10 by a spider 11. The body 10 is secured to the flange 7 at the end of the pipe 8. An annular plate 12 is mounted on the body 10 and the valve 1 is completed by a cover housing 13 secured to the plate 12. An outlet diffuser 14, being a part of the flow line 2, extends axially from the cover housing 13.

A vortex chamber 15 is formed between the body 9 and the annular body 10 and the plate 12. The body 9 comprises a cylindrical portion with a conical portion directed towards the valve 6.

A conduit 16 provides communication between apertures in the flanges 7. A passage 17 in the housing of the valve 6 extends from the conduit 16 to open into the flow line 2 immediately upstream of the butterfly valve 6, the flow direction being shown by the arrow in Figure 2. A similar passage 18 in the annular body 10 provides communication between the conduit 16 and a continuous circular groove 19 formed in the face of the annular body 10 abutting against the annular plate 12.

As shown in Figure 3, the annular plate 12 is formed with four equiangularly spaced apart channels or slots 20, each slot 20 having a nozzle 21 communicating substantially tangentially with the bore of plate 12.

The path formed by the passage 17, the conduit 16, passage 18, groove 19, slots 20 and nozzles 21 corresponds to the flow line 4 in Figure 1.

## Claims

1. A fluid flow control system including a vortex valve comprising a cylindrical vortex chamber having a radical inlet and an axial outlet adapted to form part of a main fluid flow line and a control fluid inlet by means of which a control fluid flow can be admitted to the vortex chamber, characterised in that there is provided a control fluid flow line (4) directly connecting the main fluid flow line (2) upstream of the vortex chamber (1) with the control fluid inlet of the vortex chamber (1), a non-fluidic fluid control valve (6) situated in the main fluid flow line (2) between the junction (5) of the main and control fluid flow lines (2, 4) and the inlet to the vortex chamber (1) and means for altering the state of the non-fluidic fluid control valve (6) thereby to cause a difference between the fluid pressure in the main fluid flow line (2) downstream of the non-fluidic flow control valve (6) and that in the control fluid flow line (4) so as to effect the operation of the vortex valve (1) and control the fluid flow in the main fluid flow line (2).

2. A fluid flow control system according to Claim 1 wherein the vortex valve (1) consists of an annular body 10 adapted to be connected axially to the main fluid flow line (2), a plurality of tangential inlets (20, 21) for the control fluid and a cover plate (13) including an axial outlet and flow diffuser (14) adapted to be connected to the main fluid flow line (2).

3. A method of operating a fluid flow control system including a vortex valve comprising a vortex chamber having a radical inlet and an axial outlet adapted to form part of a main fluid flow line and a control fluid inlet by means of which a control fluid flow can be admitted to the vortex chamber, a control fluid flow line directly connecting the main fluid flow line upstream of the vortex chamber with the control fluid inlet of the vortex chamber and a non-fluidic flow control valve situated between the junction of the main and control fluid flow lines and the inlet to the vortex chamber, wherein there is included the operation of varying the operating state of the non-fluidic flow control valve (6) so as to create a difference between the pressure in the fluid flowing in the control fluid flow line (4) and that in the fluid flowing in the main fluid flow line (2) downstream of the non-fluidic flow control valve (6) thereby to effect the operation of the vortex valve to control the flow of fluid in the main fluid flow line (2).

## Patentansprüche

1. Strömungsmittel-Durchfluß-Steuersystem mit einem Wirbelventil, das eine zylindrische Wirbelkammer aufweist, die einen radialen Einlaß und einen axialen Auslaß aufweist, die dazu eingerichtet sind, Teil einer Haupt-Strömungsmittel-Durchflußleitung zu bilden, sowie einen Steuerströmungsmittel-Einlaß, mittels dessen ein Steuerströmungsmittel-Durchfluß in die Wirbelkammer eingelassen werden kann, dadurch **gekennzeichnet,** daß eine Steuerströmungsmittel-Durchflußleitung (4) vorgesehen ist, die die Hauptströmungsmittel-Durchflußleitung (2) stromaufwärts von der Wirbelkammer (1) unmittelbar mit dem Steuerströmungsmittel-Einlaß der Wirbelkammer (1) verbindet, ein nicht-strömungsmittelbetätigtes Strömungsmittel-Steuerventil (6), das in der Haupt-Strömungsmittel-Durchflußleitung (2) zwischen der Verzweigungsstelle (5) der Durchflußleitungen (2, 4) des Haupt- und des Steuerströmungsmittels sowie dem Einlaß der Wirbelkammer (1) angeordnet ist, sowie Mittel zum Ändern des Zustands des nicht-strömungsmittelbetätigten Strömungsmittel-Steuerventils (6), um hierdurch eine Differenz zwischen dem Strömungsmitteldruck in der Haupt-Strömungsmittel-Durchflußleitung (2) stromabwärts vom nicht-strömungsmittelbetätigten Strömungsmittel-Steuerventil (6) und dem in der Steuerströmungsmittel-Durchflußleitung (4) zu bewirken, um das Funktionieren des Wirbelventils (1) zu bewirken und den Strömungsmittel-Durchfluß in der Haupt-Strömungsmittel-Durchflußleitung (2) zu steuern.

2. Strömungsmittel-Durchfluß-steuersystem nach Anspruch 1, worin die Wirbelkammer (1) aus einem ringförmigen Körper 10 besteht, der dazu eingerichtet ist, axial an die Haupt-Störmungsmittel-Durchflußleitung (2) angeschlossen zu werden, aus einer Vielzahl tangentialer Einlässe (20, 21) für das Steuerströmungsmittel sowie aus einer Abdeckplatte (13), die einen axialen Auslaß und einen Strömungsdiffusor (14) umfaßt, die dazu eingerichtet sind, mit der Haupt-Strömungsmittel-Durchflußleitung (2) verbunden zu sein.

3. Verfahren zum Betreiben eines Strömungsmittel-Durchfluß-Steuersystems, das ein Wirbelventil umfaßt, das eine Wirbelkammer aufweist, die einen radialen Einlaß und einen axialen Auslaß aufweist, die dazu eingerichtet sind, Teil einer Haupt-Strömungsmittel-Durchflußleitung zu bilden, sowie einen Steuerströmungsmittel-Einlaß, mittels dessen ein Steuerströmungsmittel-Durchfluß in die Wirbelkammer eingelassen werden kann, eine Steuerströmungsmittel-Durchflußleitung, die die Haupt-Strömungsmittel-Durchflußleitung stromaufwärts der Wirbelkammer mit dem Steuerströmungsmittel-Einlaß der Wirbelkammer unmittelbar verbindet, sowie ein nicht-strömungsmittelbetriebenes Durchfluß-Steuerventil, das zwischen der Verzweigungsstelle der Durchflußleitungen des Haupt- und Steuerströmungsmittels und dem Einlaß zur Wirbelkammer angeordnet ist, worin der Betriebsvorgang umfaßt ist, den Betriebszustand des nicht-strömungsmittelbetätigten Durchfluß-Steuerventils (6) so zu ändern, daß eine Differenz zwischen dem Druck im Strömungsmittel, das in der Steuerströmungsmittel-Durchflußleitung (4) strömt, und dem im Strömungsmittel, das durch die Haupt-Strömungsmittel-Durchflußleitung (2) stromabwärts vom nicht-strömungsmittelbetriebenen Durchfluß-Steuerventil (6) strömt, erzeugt wird, um hierdurch das Funktionieren des Wirbelventils zu bewirken, um den Durchfluß des Strömungsmittels in der Haupt-Strömungsmittel-Durchflußleitung (2) zu steuern.

## Revendications

1. Ensemble de réglage de circulation de fluide, comprenant une vanne à tourbillon comportant une chambre cylindrique de tourbillon ayant une entrée radiale et une sortie axiale et destinée à faire partie d'une conduite principale de circulation de fluide, et une entrée de fluide de commande grâce à laquelle un courant de fluide de commande peut être admis dans la chambre de tourbillon, caractérisé en ce qu'une conduite (4) de circulation de fluide de commande est disposée afin qu'elle raccorde directement la conduite principale (2) de circulation de fluide en amont de la chambre de tourbillon (1) à l'entrée de fluide de commande de la chambre de tourbillon (1), une vanne non fluidique (6) de réglage de fluide placée dans la conduite principale (2) de circulation de fluide entre le raccord (5) des conduites principale et de réglage (2, 4) de circulation de fluide et l'entrée de la chambre de tourbillon (1), et un dispositif destiné à modifier l'état de la vanne non fluidique (6) de réglage de fluide en provoquant ainsi une différence entre la pression du fluide dans la conduite principale (2) en aval de la vanne non fluidique (6) et celle de la conduite de commande (4) afin que le fonctionnement de la vanne à tourbillon (1) soit effectué et règle la circulation du fluide dans la conduite principale (2) de circulation de fluide.

2. Ensemble de réglage de circulation de fluide selon la revendication 1, dans lequel la vanne à tourbillon (1) comprend un corps annulaire (10) destiné à être raccordé axialement à la conduite principale (2) de circulation de fluide, plusieurs entrées tangentielles (20, 21) du fluide de commande, et une plaque formant couvercle (13) comprenant une sortie axiale et un diffuseur (14) destiné à être raccordé à la conduite principale (2) de circulation de fluide.

3. Procédé de commande d'un ensemble de réglage de circulation de fluide comprenant une vanne à tourbillon comportant une chambre de tourbillon ayant une entrée radiale et une sortie axiale et destinée à faire partie d'une conduite principale de circulation de fluide, et une entrée de fluide de commande grâce à laquelle un courant de fluide de commande peut être admis dans la chambre de tourbillon, une conduite de circulation de fluide de commande raccordant directement la conduite principale de circulation de fluide en amont de la chambre de tourbillon à l'entrée de fluide de commande de la chambre de tourbillon, et une vanne non fluidique de réglage de circulation placée entre le raccord des conduites principale et de commande et l'entrée de la chambre de tourbillon, dans lequel le procédé comprend l'opération de variation de l'état de commande de la vanne non fluidique (6) de réglage de circulation afin qu'une différence soit créée entre la pression du fluide circulant dans la conduite (4) du courant de fluide de commande et celle du fluide de la conduite principale (2) de circulation de fluide en aval de la vanne non fluidique (6) de réglage de circulation, si bien que le fonctionnement de la vanne à tourbillon est commandé pour le réglage de la circulation du fluide dans la conduite principale (2) de circulation de fluide.
